Europäisches Patentamt

European Patent Office

Office européen des brevets

(19)

(11) **EP 0 492 724 B1**

(12) **FASCICULE DE BREVET EUROPEEN**

(45) Date de publication et mention
de la délivrance du brevet:
**18.03.1998 Bulletin 1998/12**

(51) Int Cl.6: **G06T 7/20**

(21) Numéro de dépôt: **91203347.9**

(22) Date de dépôt: **18.12.1991**

(54) **Procédé d'extraction de mouvement comprenant la formation d'images de différences et un filtrage tridimensionnel**

Bewegungsausziehverfahren mit der Entstehung von Differenzbildern und einem dreidimensionalen Filter

Motion extraction process comprising the difference image forming and a three dimensional filtering

(84) Etats contractants désignés:
**DE FR GB**

(30) Priorité: **21.12.1990 FR 9016108**

(43) Date de publication de la demande:
**01.07.1992 Bulletin 1992/27**

(73) Titulaires:
• **LABORATOIRES D'ELECTRONIQUE PHILIPS S.A.S.**
  **94450 Limeil-Brévannes (FR)**
  Etats contractants désignés:
  **FR**
• **Philips Electronics N.V.**
  **5621 BA Eindhoven (NL)**
  Etats contractants désignés:
  **DE GB**

(72) Inventeur: **Florent Raoul, Société Civile S.P.I.D.**
**F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
• **IEEE TRANSACTIONS ON PATTERN ANALYSIS AND MACHINE INTELLIGENCE vol. 11, no. 3, Mars 1989, NEW YORK US pages 315 - 325; D.J. FLEET ET AL.: 'Hierarchical construction of orientation and velocity selective filters'**
• **IEEE TRANSACTIONS ON PATTERN ANALYSIS AND MACHINE INTELLIGENCE vol. 4, no. 6, Novembre 1982, NEW YORK US pages 583 - 594; G.R. LEGTERS ET AL.: 'A mathematical model for computer image tracking'**

**Description**

L'invention concerne un procédé de réalisation d'un extracteur pour identifier des cibles mobiles non ponctuelles dans une image d'une séquence d'images recalées ayant la forme de matrices bidimensionnelles de pixels d'intensité numérisées, comprenant la formation d'images de différence d'intensité.

L'invention trouve son application par exemple dans la surveillance du trafic routier par caméra infrarouge.

D'une façon générale, il est connu de l'état de la technique par la publication de D. CASASENT, intitulée "Subpixel Target Detection and Tracking", dans "SPIE, Vol.726, 1986, pp. 206-220" d'aborder le problème de la détection, en traitement d'images, par une décomposition selon deux étapes : une étape d'extraction et une étape de suivi ou validation au moyen d'un filtre de mouvement.

Il est en particulier décrit, parmi six algorithmes proposés, une méthode de filtrage incluant le seuillage de la différence entre deux images, donc utilisant une seule différence d'images qui est la dérivée première de l'intensité en fonction du temps, suivie d'un procédé de poursuite de trajectoire. Ces algorithmes sont réservés à la détection de cibles ponctuelles. Après une extraction simple, on est amené à prendre une décision binaire.

Il est déjà connu de la publication "Hierarchical Construction of Orientation and Velocity Selective Filters" par David J. FLEET et alii, dans "IEEE Transactions on Pattern Analysis and Machine Intelligence, Vol.11, N°3, Mars 1989, p. 315-325", de réaliser un filtre de mouvement pour l'extraction d'informations d'orientation et de vitesse. Le document cité présente une variété d'outils utiles pour la construction de filtres linéaires simples. Un arrangement pour un traitement parallèle hiérarchisé est utilisé, dont les noeuds calculent une somme pondérée des entrées, à l'intérieur d'un petit voisinage spatiotemporel. Un arrangement particulier consiste en un filtrage passe-bas dans une orientation préférentielle. Cette opération est effectuée en utilisant des Différences de Gaussiennes (DOG) et en prenant, en une seule étape, une somme pondérée des sorties des Différences de Gaussiennes, avec une enveloppe lissante sur les poids. Le choix de cette enveloppe inclut une Gaussienne et une fenêtre de Kaiser.

Il est par ailleurs connu de l'état de la technique par la publication de N.C. MOHANTY, intitulée "Computer Tracking of Moving Point Targets in Space", dans "Trans. PAMI, vol.3, n°5, 606-611, 1981", une méthode de filtrage linéaire tridimensionnel utilisant de grands supports. De tels filtres ont la propriété de permettre la conservation totale des informations concernant les niveaux de gris. En revanche, le volume des informations conservées étant immense, les calculs impliqués par une méthode incluant ce type de filtre sont absolument énormes. Il en résulte que ce genre de méthode n'est applicable qu'à des cibles ponctuelles dans de très petites images.

Un des buts de l'invention est de proposer un outil de détection d'objets résolus. Par objets résolus il faut entendre des objets de taille moyenne se déplaçant dans une séquence d'images prise par exemple par une caméra infrarouge non fixe. Ainsi le procédé selon l'invention ne s'adresse pas à la détection d'objets ponctuels.

On rappelle qu'une image est un ensemble de pixels et que chaque pixel à un certain niveau de gris codé sur un certain nombre de bits. Par exemple, si le codage est fait sur 8 bits, les niveaux de gris peuvent prendre toutes les valeurs entre 0 et 255. On considèrera que la valeur 255 correspond à un pixel brillant et la valeur 0 à un pixel noir.

On notera que la détection de mouvement dans une séquence d'images implique d'abord une différence entre deux images consécutives, de manière à faire apparaître les parties mobiles et les parties fixes.

Un des buts de l'invention est de fournir un extracteur de mouvement capable de détecter des objets mobiles peu brillants et ce avec un faible taux de fausse alarme. Les résultats de cet extracteur sont destinés à un algorithme de suivi de trajectoire.

Un des buts de l'invention est donc de fournir un extracteur ayant un taux de détection et des probabilités de fausses alarmes améliorés par rapport à l'état de la technique, dans le but d'obtenir une détection de grande qualité.

Un but de l'invention est aussi de fournir un extracteur suffisamment simple pour pouvoir être implémenté en temps réel. En particulier le nombre de plans mémoire nécessaire, ainsi que le temps de calcul requis devront être raisonnables.

Le contexte de travail du procédé selon l'invention impose un certain nombre de conditions.

En effet, en premier lieu, les images sont bruitées, c'est-à-dire que l'on trouve, dans l'image de différences, des contributions dues au bruit, qui peuvent donner l'impression d'objets mobiles ou de cibles.

En second lieu, les images doivent être recalées. Cela est nécessaire du fait que, en général, la caméra qui fait l'acquisition des images à traiter n'est pas stable. Elle est elle-même mobile, soit parce qu'elle est montée sur un véhicule en mouvement, soit parce qu'elle est montée sur un pylône qui oscille dans le vent, par exemple. Les images acquises sont donc recalées les unes vis-à-vis des autres de manière à ce que le fond, par exemple, apparaisse fixe dans la séquence d'images. Le recalage est effectué par un procédé connu en soi, qui ne fait donc pas partie de l'invention. Mais il apparaît que le procédé de recalage n'est jamais parfait. Il conduit en général à des erreurs de recalage de l'ordre du pixel, ce qui signifie qu'entre deux images consécutives, il apparaît des erreurs systématiques de l'ordre du pixel sur la coïncidence des parties corrspondantes des images. Il en résulte que, dans l'image de différences, on trouve la contribution de ces erreurs de recalage, que l'on peut prendre également pour des objets mobiles. D'autre part, dans le procédé de recalage, il peut apparaître en outre des erreurs occasionnelles importantes s'étalant sur une proportion non négligeable d'images successives dans la séquence d'images. La contribution de ces erreurs occasionnelles dues au procédé de recalage sont aussi une source d'erreurs dans la détection de cibles en mouvement lent.

En troisième lieu, parmi les objets qui peuvent apparaître sur les images, on trouve un certain nombre de cibles que l'on ne veut pas détecter. Ce sont par exemple, des arbres ou des nuages en mouvement, ou encore des parties du fond soumises à des variations de l'éclairage. Au contraire, un de buts de l'invention est la détection de mobiles, ayant des trajectoires relativement continues et relativement régulières.

Un des buts de l'invention est de proposer un procédé d'extraction qui s'affranchisse des inconvénients liés aux types de procédés connu, tels que la simple différence et le filtrage tridimensionnel sur gros support.

Un des buts de l'invention est de proposer un procédé d'extraction suffisamment économique en temps de calcul pour permettre une implémentation en temps réel ou quasi-temps réel, capable de s'appliquer à des images suffisamment grandes, par exemple 512 x 512 pixels, dont le taux de détection et la probabilité de fausses alarmes sont suffisamment satisfaisants pour conduire à une détection de grande qualité.

Selon l'invention, ces buts sont atteints au moyen d'un procédé tel que défini dans la revendication 1.

L'invention est décrite ci-après en détail en référence avec les figures schématiques annexées dont :

- la figure 1 qui représente le support du filtre utilisé,
- la figure 2 qui représente la projection sur un plan de huit directions possibles des déplacements détectables,
- la figure 3 qui montre un schéma fonctionnel d'un procédé de seuillage.

## PREMIERE ETAPE

Selon l'invention, au lieu d'une extraction comme connu de l'état de la technique, sur 2 images fournissant une image de différences, on propose une extraction plus complète faisant intervenir 4 images recalées successives d'une séquence d'images recalées $R_n(i,j)$, soit :

$$R_{n-3}, R_{n-2}, R_{n-1}, R_n$$

A partir de ces 4 images, on génère 3 images de différences successives d'une séquence d'images de différences $D_n(i,j)$ de la manière indiquée sur le tableau I suivant :

### TABLEAU I

Comme montré sur ce tableau I, les images $R_{n-3}$ $R_{n-2}$ participent à la création de l'image de différences $D_{n-2}$, $R_{n-1}$ et $R_{n-2}$ à la création de $D_{n-1}$, $R_n$ et $R_{n-1}$ à la création de $D_n$.

La première étape du procédé de détection est donc une étape de création d'images de différences $D_n(i,j)$.

On peut créer ainsi : soit les valeurs absolues des images de différences, soit les valeurs positives des images de différences, soit les carrés des différences. En effet, on se place dans la situation où on veut détecter des objets, ou cibles, brillants sur un fond noir, ou au moins un fond plus foncé. Ainsi, on n'utilisera pas les valeurs négatives.

## SECONDE ETAPE

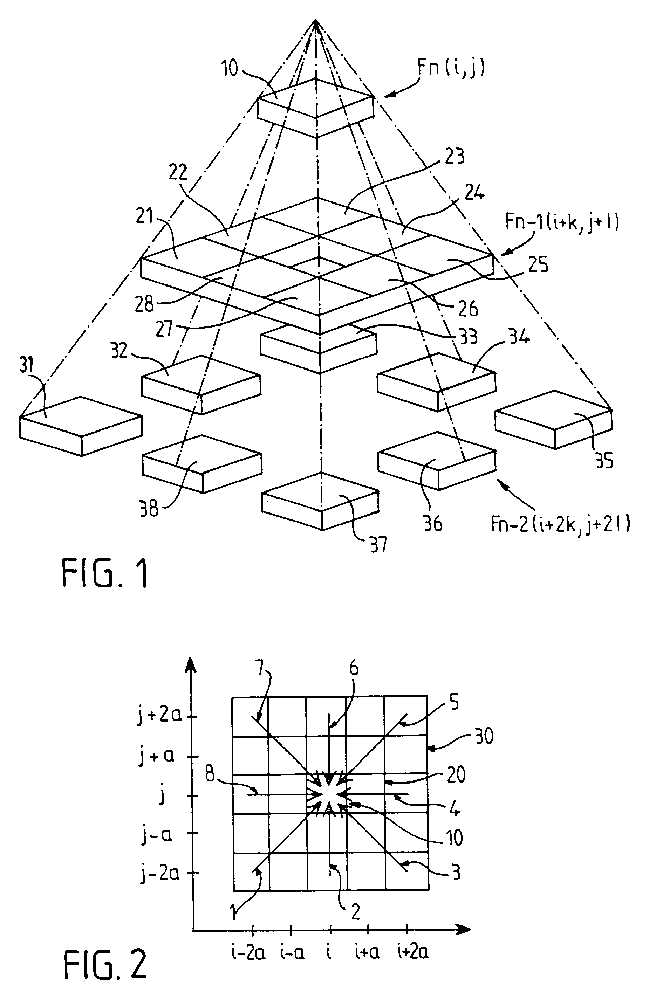

A l'issue de cette opération dans la première étape, il est encore nécessaire à la validation parfaite de la détection de faire suivre le détecteur ainsi réalisé, par un filtre de mouvement tel que le filtre représenté sur la figure 1.

Ce filtre va utiliser les 3 images de différences $D_{n-2}$, $D_{n-1}$, $D_n$ créées dans la 1ère étape.

On va d'abord montrer qu'un procédé incluant un filtre utilisant 3 images de différences, comme selon l'invention, est plus avantageux qu'un procédé comportant une seule extraction sur un seule image de différences suivie d'un filtre de mouvement comme connu de l'état de la technique.

Dans le procédé selon l'invention, on va traiter en même temps temps les 3 images de différences $D_{n-2}$, $D_{n-1}$, et $D_n$. Dans ce cas, si une cible n'est pas très bien représentée dans l'image de différences $D_{n-2}$ on a tout lieu de penser qu'elle sera mieux représentée au moins dans l'image de différences $D_{n-1}$; ou dans l'image de différences $D_n$.

On effectuera alors une moyenne sur $D_{n-2}$, $D_{n-1}$, $D_n$ et on aura une certitude raisonnable de retrouver la cible qui était mal représentée à l'origine. Cette cible aurait été perdue par la méthode connue de l'état de la technique.

Les avantages procurés par le traitement simultané de 3 images de différences sont les suivants :

- ce nombre est le nombre d'images minimal indispensable pour éliminer correctement les mouvements oscillants ;
- ce nombre est un nombre raisonnable pour permettre l'implémentation du procédé dans un dispositif (en anglais : HARDWARE) ;
- l'extracteur réalisé reste suffisamment simple pour permettre une implémentation en temps réel ; ainsi le temps de calcul est très raisonnable, et seulement trois plan mémoires sont nécessaires, ce qui, aussi bien dans l'état actuel de la technologie qu'au vu de son évolution future, est également très raisonnable.

Une hypothèse restrictive doit cependant être attachée au procédé selon l'invention. Cette hypothèse est dite "de recouvrement". Elle consiste à supposer qu'entre deux images successives, il y a recouvrement des silhouettes des objets à détecter.

L'information de mouvement étant donnée au plus bas niveau par la séquence des différences inter-images. Il faut noter que dans cette séquence :

- les objets mobiles dont le déplacement est compatible avec l'hypothèse de recouvrement génèrent des pistes continues qui sont en première approximation une succession de déplacements linéaires ; donc, dans l'hypothèse de recouvrement, on obtient finalement une série de taches dans l'image de différences formant une piste continue d'énergie. Et dans la séquence de différences, ces pistes continues évoluent au cours du temps. Cette information constitue une base de travail du procédé ;
- le bruit contenu dans l'image originale engendre un bruit de puissance double dans l'image de différences, mais dont la densité d'énergie est très faible ; il s'agit donc d'un bruit réparti sur toute l'image de différences ;
- les erreurs de recalage sur les grandes zones peu contrastées du fond sont à l'origine de concentrations d'énergie non stationnaires au cours du temps : on pourra donc voir apparaître des contributions dues aux erreurs de recalage, mais ces contributions se déplacent constamment sur toute la surface de l'image ;
- les erreurs de recalage sur les petites zones contrastées du fond engendrent des concentrations d'énergie relativement stables en dimension et dont le centre de gravité oscille autour d'une position fixe ; si par exemple dans l'image, on trouve un objet comme un réverbère, il fournit une tache concentrée, mais il peut aussi avoir un mouvement oscillant dans le vent, sur lequel on a des erreurs de recalage, ce qui engendre dans l'image de différences des traces oscillant autour de la position fixe constituée par le centre du réverbère.

Donc, en regardant toutes ces contributions dans la séquence des images de différences, il apparaît que les objets à détecter peuvent être discernés des fausses alarmes par le fait que, dans la séquence des différences inter-image eux seuls sont susceptibles de produire des concentrations d'énergie ayant des déplacements linéaires sur un petit nombre d'images.

Le filtre proposé dans cette seconde étape, exploite directement cette constation. Dans cette étape, on va chercher, dans la séquence des images de différences, des trainées linéaires représentatives d'objets en mouvement.

Tel que représenté sur la figure 1, le filtre proposé présente trois étages, formant une figure dans l'espace donnant l'idée d'une pyramide.

Le premier étage de ladite pyramide comporte une cellule élémentaire 10 qui symbolise un filtre élémentaire de petit support, par exemple 3 x 3 pixels dont le coefficient sera défini ultérieurement. La première image de différences $D_n$ obtenue à l'étape précédente est alors filtrée par la cellule 10, laquelle fournit la différence filtrée à l'ordre n, notée $F_n(i,j)$.

Le second étage du filtre de la figure 1 est composé de 8 cellules élémentaires disposées dans un plan sousjacent, référencées 21, 22, 23, 24, 25, 26, 27, 28 de même support que la cellule 10 et de même coefficient. Ces cellules sont groupées en forme de couronne ayant les mêmes axes de symétrie que la première cellule 10. Ce deuxième étage fournit le résultat du filtrage à l'ordre n-1, noté $F_{n-1}$ (i+k, j+$\ell$) de l'image de différences $D_{n-1}$.

Le troisième étage du filtre de la figure 1 est composé encore de 8 cellules élémentaires, disposées encore dans un plan sous-jacent par rapport au deuxième étage, référencées 31, 32, 33, 34, 35, 36, 37, de même support et coefficient que les cellules précédentes, mais formant dans ce troisième plan une couronne incomplète ayant cependant les mêmes axes de symétrie que la seconde couronne. Ce troisième étage fournit le résultat du filtrage à l'ordre n-2, noté $F_{n-2}$ (i+2k, j+2$\ell$) de l'image de différences $D_{n-2}$.

Donc chaque cellule élémentaire est symbolisée sur la figure 1, par une petite dalle, carrée, qui représente en fait le support du filtre utilisé.

Au centre de la dalle 10, par exemple, on trouve le point $F_n$ qui a été obtenu en réalisant la moyenne sur cette zone là, dans l'image $D_n$. Le procédé consiste à déplacer cette structure tridimensionnelle de filtre de la figure 1 sur les 3 images de différences considérées.

Cependant, il ne sera pas indispensable de considérer la totalité du parallélépipède généré par le déplacement d'un support parallélépipèdique (dalle) dans les 3 images. On pourra se restreindre à seulement certaines positions privilégiées dans ce parallélépipède.

Afin de rendre plus clair l'exposé concernant le filtrage, considérons la figure 2 qui représente les projections du filtre de la figure 1. On retrouve en 10 le centre. Puis on retrouve en 20, la première couronne, et en 30, la deuxième couronne. Les axes de coordonnées en i et j représentent les déplacements du filtre. Il est clair qu'un tel filtre définit 8 positions de mouvement linéaire aboutissant au centre $F_n$. Toutes les possibilités de déplacement aboutissant au centre $F_n$ purement linéaires sur 3 images sont représentées dans un tel filtre.

Donc si un objet à détecter se déplace dans l'image de différences, il va générer une trace continue linéaire que l'on va retrouver car elle sera représentée sur l'une des pistes représentées de 1 à 8 sur la figure 2.

Ces pistes 1 à 8 représentent les pistes d'énergie. Comme on l'a dit précédemment, il peut arriver qu'on ait une image où une cible est mal représentée, ou dont l'énergie est assez faible. On a tout lieu de penser que si l'énergie est faible dans la zone 10, elle sera plus forte dans la 1ère ou dans la 2ième couronne. Il en résulte qu'en faisant la somme de toutes ces énergies, il va apparaître une énergie assez importante au moins dans l'une des directions 1 à 8 de la figure 2.

Selon l'invention, on examinera l'énergie dans chacune des 8 directions, 1 à 8, et on prendra le maximum de ces 8 énergies.

Du fait que l'on va prendre le maximum, cela implique que le filtre utilisé sera non linéaire. Il faut noter cette caractéristique importante.

En effet, si au lieu de prendre le maximum, on avait choisi de faire la moyenne sur les 8 directions, dans la plupart des cas, on aurait obtenu un résultat dérisoire, notamment dans le cas où il n'y aurait eu qu'un seul mouvement dans une seule direction.

Le filtre utilisé selon l'invention est particulièrement avantageux.

- Ce filtre défavorise clairement les contributions du bruit de la séquence originale, simplement par l'effet du filtrage. D'une part le filtrage spatial de petit support de type passe-bas (par exemple 3 x 3) que l'on passe sur chaque image de différences atténue déjà fortement le bruit. Mais d'autre part on effectue aussi un filtrage dans une direction temporelle du fait que l'on ajoute 3 éléments venant de 3 images de différences. Donc l'effet du filtrage est double : il est spatial et temporel. Il est donc de nature à défavoriser fortement les contributions de bruit blanc dans une image.

- Ce filtre défavorise les contributions non stationnaires des erreurs de recalage. On avait vu que les erreurs de recalage sur les grandes zones peu contrastées du fond sont à l'origine de concentrations d'énergie non stationnaires au cours du temps. Ces concentrations d'énergie non stationnaires seront donc défavorisées par l'aspect de filtrage temporel. En effet, si l'on considère les concentrations d'énergie sur un filtrage spatial, on constate que le bruit ne sera pas totalement atténué, mais par contre, du fait que ces concentrations sont non stationnaires au cours du temps, en regardant dans les directions privilégiées définies précédemment, on obtiendra l'atténuation recherchée. Donc on atténue cette deuxième cause de bruit par filtrage temporel.

- Ce filtre défavorise les contributions quasi-stationnaires des erreurs de recalage, de par sa structure même, laquelle privilégie les directions linéaires. Ainsi, considérant les déplacements des contributions du bruit qu'on a dit être oscillants, ces déplacements s'effectueront par exemple entre la première et la seconde couronne du filtre et n'atteindront pas la troisième couronne : en supposant que l'on se restreigne à des mouvements oscillants d'amplitude maximale définie par le côté de la 2ème couronne, on n'aura pas de mouvement oscillant présent dans la troisième couronne. Ainsi ce filtre défavorise les mouvements oscillants.

On va maintenant ci-après formaliser le filtre décrit précédemment en référence avec les figures 1 et 2.

On a déjà défini :

$R_n(i,j)$ une séquence d'images recalées,

$D_n(i,j)$ la séquence des différences inter-images telle que

$$D_n = R_n - R_{n-1},$$

$F_n$ le résultat d'une opération de filtrage linéaire sur $D_n$. Ce filtrage est un filtrage linéaire classique : les coefficients et la taille du support sont à déterminer A PRIORI, et dépendent des objets que l'on veut détecter. Ces paramètres dépendent essentiellement :

- de la taille des objets à détecter,
- de la vitesses des objets à détecter (la vitesse étant considérée relativement à la fréquence de prise de vue de la caméra qui effectue la visée).

Donc l'opération de filtrage définit l'opération non linéaire suivante sur :

$$F_n = Gn(i,j) = \max \{Fn(i,j) + F_{n-1}(i+k, j+\ell)$$

$$+ F_{n-2}(i+2k, j+2\ell)\}$$

où $(k,\ell)$ décrit $\{-a,0,a\} * \{-a,0,a\}$ privé de $(0,0)$. Le support d'un tel filtre est représenté en figure 1. Les cellules élémentaires qui le composent symbolisent les opérations linéaires effectuées sur les $D_n$.

La structure pyramidale de ce filtre définit huit directions de déplacement (voir figures 1 et 2). Le filtre évalue la moyenne des niveaux de gris le long de ces huit directions et en calcule le maximum.

On a dit ci-dessus que l'on faisant la moyenne des niveaux de gris. En fait, il apparaît plus simple de faire la somme, ce qui ne change rien au filtrage. On effectue bien une moyenne de l'énergie selon chaque direction, puis l'on prend le maximum de cette moyenne. Donc, la valeur de $G_n(i,j)$ est d'autant plus élevée qu'une importante concentration de pixels positifs existe dans au moins une direction de déplacement linéaire aboutissant en $(i,j)$.

Un point important est que la taille des cellules élémentaires de filtrage, ainsi que leur répartition spatiale, c'est-à-dire le paramètre $\underline{a}$ de la fonction $G_n(i,j)$ définissent l'intervalle des vitesses détectables par un tel filtre. L'extraction de mouvement, qui doit fournir une information binaire, consiste alors à effectuer une <u>opération de seuillage</u> à la sortie du filtre $G_n$ constituant une troisième étape.

## TROISIEME ETAPE

Divers procédés de seuillage sont possibles.

A/ un procédé de seuillage du type :
S = moyenne + k* σ, (k étant fixe et σ défini comme l'écart type à partir de la variance des niveaux de gris :

$$1\sigma^2 = \frac{1}{N} \Sigma (I_k - I)^2$$

où $I_k$ est l'ensemble des pixels par niveau de gris et I la moyenne.

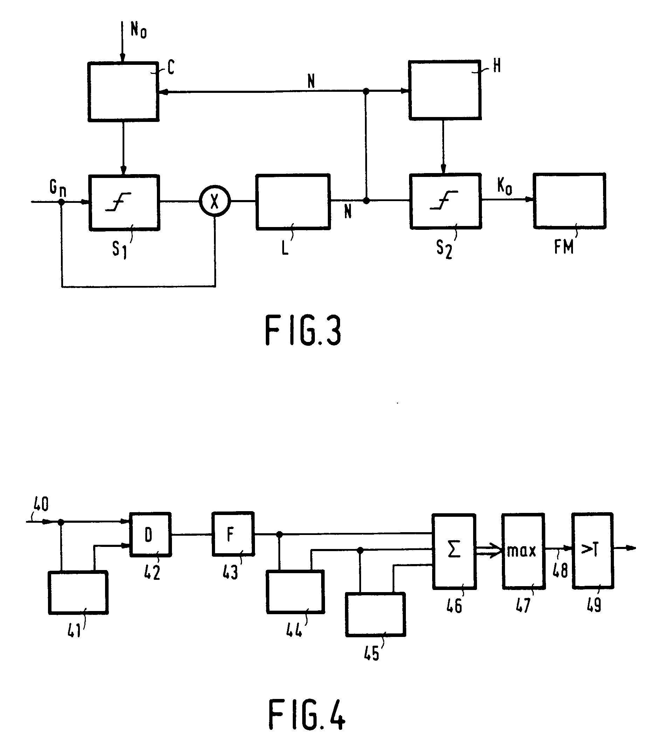

B/ Un procédé plus élaboré, demandant plus de puissance de calculs, mais formant une technique plus fine et plus efficace pour définir le seuillage est décrit ci-après en référence avec la figure 3 qui montre le schéma fonctionnel de ce procédé.

Le procédé de seuillage travaille sur $G_n$ fourni par le filtre précédemment décrit et débute par une étape de seuillage $S_1$ du type connu qui initialise le seuil à :

$$S_0 = \text{moyenne} + k^* \sigma.$$

On choisit un tel seuil $S_0$ à un niveau assez bas, et on fait suivre le seuillage $S_1$ d'une opération d'étiquetage (ou labellisation) référencée L sur la figure 3. Cette opération L donne le nombre d'objet N dans l'image (et leurs mesures) ayant subi le seuillage $S_1$.

En dernière opération du procédé, on utilise un filtre de mouvement référencé FM, et on désire nourrir ce filtre de mouvement FM par un nombre d'objets constant $K_0 < N$.

A cet effet, on extrait des N objets labellisés par la fonction L, lesdits $K_0$ meilleurs objets ($N > K_0$) pour présenter le résultat au filtre de mouvement FM.

On regarde à cette étape l'histogramme sur les objets, c'est-àdire que sur ces objets, on se définit une mesure, qui est soit leur taille, soit leurs niveaux de gris, ou un compromis entre taille et niveaux de gris.

Cet histogramme permet de calculer un seuil $S_2$ pour avoir un nombre d'objets $K_0$ constant à présenter au filtre FM.

En observant N, en sortie de la labellisation, on est capable de rétroagir sur le premier seuillage $S_1$, en comparant N à $N_0$, $N_0$ étant choisi a priori. On définit une règle simple :

Si $N < N_0$, on en déduit que l'on a un nombre d'objets inférieur au nombre d'objets désiré, et on agit sur la fonction C pour décrémenter le seuil $S_1$, en faisant $S_1 = S_1 - 1$.

Si $N > N_0$, au contraire, la fonction C incrémente le seuil en faisant $S_1 = S_1 + 1$.

La sortie de la fonction C est injectée sur la fonction de seuillage $S_1$ réalisant un asservissement du seuil pour permettre d'obtenir en sortie un nombre d'images qui se rapproche de $N_0$.

On notera que l'opération d'asservissement est peu coûteuse en temps de calcul. L'opération de la labellisation est un peu plus longue. Elle peut être réalisée dans un processeur. Ensuite l'opération sur l'histogramme est très rapide, du fait que l'on ne considère que les objets. La règle d'asservissement, par ailleurs, est connue de l'homme du métier dans le domaine de l'asservissement numérique.

En conclusion, dans le filtre tridimensionnel, tel que représenté sur les figure 1 et 2, la taille des cellules élémentaires de filtrage et leur répartition spatiale définissent l'intervalle des vitesses détectables par ce filtre. Ce filtre imposera donc l'intervalle des vitesses.

- Si la séquence comporte un objet très lent, qui reste dans la première cellule du filtre (cellule 10), on n'aura pas de contribution d'énergie dans la 2ème et dans la 3ème couronne.
- Par contre si la séquence comporte un objet animé d'une grande vitesse, qui ne respecte pas l'hypothèse de recouvrement, on peut le trouver d'abord dans la première cellule, puis le perdre parce qu'il serait passé au-delà dela 3ème couronne entre deux images successives.

En pratique, dans l'exemple de mise en oeuvre testé on a choisit des cellules de 3 x 3 pixels de côté qui définissent un intervalle de vitesse raisonnablement important, sur lequel on peut travailler raisonnablement confortablement.

Plus l'objet est étendu, plus le filtrage est opérant. Par contre, ce filtre opère très mal sur une cible ponctuelle, puisqu'il utilise des filtrages linéaires, lesquels ont tendance à gommer les cibles ponctuelles.

La méthode proposée a été testée sur un grand nombre de séquences. Les résultats ont montré la superiorité très nette de cette méthode sur les techniques classiques de filtrage et seuillage des différences inter-images. En particulier, il a été montré qu'une extraction classique exploitant une seule différence d'image suivie des étapes d'un procédé (algorithme) de poursuite de trajectoire intégrant l'information contenue dans 3 extractions successives fournissait des performances inférieurs à celles de l'extracteur selon l'invention. Simplement du fait que dans le procédé connu, on est amené à prendre une décision binaire résultant dans des pertes d'information. Alors que selon l'invention on conserve l'information relative à tous les niveaux de gris sur une profondeur de 3 images.

Le procédé selon l'invention peut être utilisé également sur des images sous-échantillonnées spatialement ; on détectera alors des mouvements de plus grande amplitude avec un coût de calcul identique ou inférieur.

Le même procédé peut aussi être appliqué à des séquences sous-échantillonnées temporellement pour détecter des mouvements de moins grande amplitude avec un coût identique.

## Revendications

1. Procédé de réalisation d'un extracteur pour identifier des cibles mobiles non ponctuelles dans une image $R_n$ d'une séquence d'images recalées ayant la forme de matrices bidimensionnelles de pixels d'intensité numérisée, comprenant la formation d'images de différence d'intensité, caractérisé en ce qu'il comprend des étapes de :

formation d'une première sous-séquence d'au moins quatre images successives $R_{n-3}$, $R_{n-2}$, $R_{n-1}$, $R_n$,
formation d'une deuxième sous-séquence d'au moins trois images de différence d'intensité $D_{n-2}$, $D_{n-1}$, $D_n$ à partir des images de la première sous-séquence,
filtrage spatiotemporel de la dernière image de la première sous-séquence pour identifier une direction de mouvement associée à un pixel donné (i,j)

par un filtre

$$G_n(i,j) = Max\{F_n(i,j) + F_{n-1}(i+k,j+l) + F_{n-2}(i+2k,j+2l)\}$$

où $F_x$ représente un filtrage linéaire sur l'image $D_x$, $\{k,l\}$ définissent un ensemble de coordonnées discrètes dont le couple $\{0,0\}$ est exclu, où $-a \leq k \leq a$, $-a \leq l \leq a$, où $a$ est une constante positive predéfinie, et l'opération *Max* détermine le maximum pour toutes combinaisons de coordonnées $\{k,l\}$ identification d'un pixel (i,j) de ladite dernière

image ($R_n$) de la première sous-séquence comme faisant partie d'un objet mobile, lorsque le maximum évalué par le filtre spatiotemporel répond à un critère de seuil.

2. Procédé selon la revendication 1, caractérisé en ce que le filtrage spatiotemporel est effectué par un filtre spatial ayant autant d'étages temporels qu'il y a d'images dans la deuxième sous-séquence, pour correspondre respectivement auxdites images, lesdits étages étant arrangés en une structure pyramidale, et des axes de symétrie formant lesdites directions privilégiées étant définis dans les étages de ladite structure pyramidale, ce filtre effectuant :

l'évaluation à chaque étage de l'énergie le long de chacune des directions privéligiées dans l'image correspondante de la deuxième sous-séquence,
l'évaluation des énergies accumulées dans tous les étages le long de chaque direction,
l'évaluation de l'énergie maximale parmi les énergies accumulées,

3. Procédé selon la revendication 2, caractérisé en ce que la structure pyramidale comprend au moins :

un premier étage à une seule cellule élémentaire de filtrage linéaire passe-bas ayant 8 axes de symétrie pour fournir un filtrage linéaire ($F_n$ i,j) dans la dernière image ($D_n$) de la deuxième sous-séquence selon chacun de ces axes,
un second étage comportant une couronne appelée première couronne formée de 8 cellules élémentaires de filtrage linéaire passe-bas, cette couronne ayant 8 axes de symétrie en coïncidence avec les axes de la cellule élémentaire du premier étage, pour fournir un filtrage linéaire $F_{n-1}(i,j)$ dans l'avant dernière image ($D_{n-1}$) de la deuxième sous-séquence selon chacun de ces axes,
un troisième étage comportant une couronne appelée seconde couronne, formée de 8 cellules élémentaires de filtrage linéaire passe-bas, entourant la première couronne, cette seconde couronne ayant 8 axes de symétrie en coïncidence avec les axes de la cellule élémentaire du premier étage pour fournir un filtrage linéaire $F_{n-2}(i+k, j+\ell)$ dans l'avant dernière image ($D_{n-2}$) de la deuxième sous-séquence, selon chacun de ces axes, les directions de mouvement détectables par le filtre coïncidant avec les 8 axes de symétrie des étages.

4. Procédé selon la revendications 3, caractérisé en ce que chaque cellule élémentaire de filtrage linéaire est un filtre passe-bas de petit support, par exemple 3 x 3 pixels, et de coefficients choisis A PRIORI en fonction de la taille des cibles à identifier et de leur vitesse.

5. Procédé selon l'une des revendications précédentes, caractérisé en ce que dans la séquence d'images recalées, il y a recouvrement partiel des silhouettes des cibles d'une image à l'autre.

6. Procédé selon l'une des revendications précédentes, caractérisé en ce que, le critère de seuillage est choisi parmi un seuillage fixe, adaptatif ou un seuillage asservi.

7. Procédé selon la revendication 6, caractérisé en ce que l'on choisit un seuillage asservi pour nourrir le filtre de mouvement avec un nombre constant de cibles détectées.

8. Procédé selon l'une des revendications précédentes, caractérisé en ce que l'étape de seuillage est suivie d'une étape de filtrage par un filtre de suivi de mouvement.

9. Procédé selon l'une des revendications 1 à 8, caractérisé en ce qu'il est appliqué à des séquences d'images sous-échantillonnées spatialement, pour détecter des mouvements de plus grande amplitude.

10. Procédé selon l'une des revendications 1 à 8, caractérisé en ce qu'il est appliqué à des séquences d'images sous-échantillonnées temporellement pour détecter des mouvements de plus faible amplitude.

**Claims**

1. A method of realizing an extractor for identifying non-punctiform moving targets in an image $R_n$ of a sequence of registering images in the form of two-dimensional matrices of pixels of digitized intensity, including the formation of intensity difference images, characterized in that it includes the stages of:

- forming a first sub-sequence of at least four successive images $R_{n-3}$, $R_{n-2}$, $R_{n-1}$, $R_n$,
- forming a second sub-sequence of at least three intensity difference images $D_{n-2}$, $D_{n-1}$, $D_n$ on the basis of the images of the first sub-sequence,
- spatial-temporal filtering of the last image of the first sub-sequence in order to identify a direction of motion associated with a given pixel (i,j) by means of a filter

$$G_n(i,j) = Max \{F_n(i,j) + F_{n-1}(i+k,j+l) + F_{n-2}(i+2k,j+2l)\},$$

where $F_x$ represents a linear filtration on the image $D_x$, (k,l) define a set of discrete coordinates wherefrom the pair {0,0} is excluded, where $-a \leq k \leq a$, $-a \leq l \leq a$, where a is a predefined positive constant, and the operation Max determines the maximum for all combinations of coordinates {k,l},

- identifying a pixel (i,j) of said last image ($R_n$) of the first sub-sequence as forming part of a moving object when the maximum evaluated by the spatial-temporal filters satisfies a threshold criterion.

2. A method as claimed in Claim 1, characterized in that the spatial-temporal filtering is performed by a spatial filter having as many time stages as there are images in the second sub-sequence in order to correspond to said respective images, said stages being arranged in a pyramidal structure, symmetry axes constituting said privileged directions being defined in the stages of said pyramidal structure, said filter performing:

- the evaluation, at each stage, of the energy along each of the privileged directions in the corresponding image of the second sub-sequence,
- the evaluation of the accumulated energies in all stages along each direction,
- the evaluation of the maximum energy from among the accumulated energies.

3. A method as claimed in Claim 2, characterized in that the pyramidal structure comprises at least:

- a first stage with a single elementary low-pass linear filtering cell having 8 axes of symmetry in order to achieve a linear filtering ($F_n(i,j)$) in the last image ($D_n$) of the second sub-sequence according to each of these axes,
- a second stage with a ring which is referred to as the first ring and is formed by 8 elementary low-pass linear filtering cells, said ring having 8 axes of symmetry coincident with the axes of the elementary cell of the first stage in order to achieve a linear filtering $F_{n-1}(i,j)$, in the last image but one ($D_{n-1}$) of the second sub-sequence according to each of these axes,
- a first stage with a ring which is referred to as the second ring and is formed by 8 elementary low-pass linear filtering cells, enclosing the first ring, said second ring having 8 symmetry axes coincident with the axes of the elementary cell of the first stage in order to achieve a linear filtering $F_{n-2}(i+k,j+l)$ in the last image but one ($D_{n-2}$) of the second sub-sequence according to each of these axes,

    the directions of movement that can be detected by the filter being coincident with the 8 axes of symmetry of the stages.

4. A method as claimed in Claim 3, characterized in that each elementary linear filter cell is a low-pass filter having a small support, for example 3 x 3 pixels, and coefficients chosen a PRIORI as a function of the size and the speed of the targets to be identified.

5. A method as claimed in one of the preceding Claims, characterized in that partial overlapping of the silhouettes of the targets occurs from one image to another in the sequence of registering images.

6. A method as claimed in one of the preceding Claims, characterized in that the thresholding criterion is chosen from among fixed, adaptive or variable thresholding.

7. A method as claimed in Claim 6, characterized in that variable thresholding is chosen so as to feed the motion filter with a constant number of detected targets.

8. A method as claimed in one of the preceding Claims, characterized in that the thresholding stage is succeeded by a filtering stage by means of a motion tracking filter.

9. A method as claimed in one of the Claims 1 to 8, characterized in that it is applied to spatially sub-sampled image sequences in order to detect motions of higher amplitude.

10. A method as claimed in one of the Claims 1 to 8, characterized in that it is applied to temporally sub-sampled image sequences in order to detect motions of lower amplitude.

**Patentansprüche**

1. Verfahren zur Realisation eines Extraktors zur Identifizierung von beweglichen, nicht-punktförmigen Zielobjekten in einem Bild $R_n$ aus einer Folge von abgeglichenen Bildern, die die Form von zweidimensionalen Matrizen von Pixeln mit unterschiedlicher digitalisierter Helligkeit haben, das die Bildung von Differenzbildern umfaßt, <u>dadurch gekennzeichnet,</u> daß es die folgenden Schritte umfaßt:

Bildung einer ersten Teilfolge aus wenigstens vier aufeinanderfolgenden Bildern $R_{n-3}$, $R_{n-2}$, $R_{n-1}$, $R_n$,
Bildung einer zweiten Teilfolge aus wenigstens drei Intensitätsdifferenzbildern $D_{n-2}$, $D_{n-1}$, $D_n$ aus den Bildern der ersten Teilfolge,
räumlich-zeitliche Filterung des letzten Bildes der ersten Teilfolge, um eine zu einem gegebenen Pixel (i,j) gehörige Bewegungsrichtung zu identifizieren, und zwar mittels eines Filters

$$G_n(i,j) = Max\{F_n(i,j) + F_{n-1}(i+k,j+l) + F_{n-2}(i+2k,j+2l)\},$$

wobei $F_l$ eine lineare Filterung über das Bild $D_l$ repräsentiert, {k,l} eine Menge von diskreten Koordinaten definiert, von den das Paar {0,0} ausgeschlossen ist, wobei $- a \leq k \leq a$, $-a \leq k \leq a$, wobei a eine positive, vordefinierte Konstante ist und die Operation Max das Maximum für alle Koordinatenkombinationen {k,l} bestimmt, Identifikation eines Pixels (i,j) des genannten letzten Bildes ($R_n$) der ersten Teilfolge als Teil eines beweglichen Objekts, wenn das vom räumlich-zeitlichen Filter errechnete Maximum einem Schwellenkriterium entspricht.

2. Verfahren nach Anspruch 1, <u>dadurch gekennzeichnet,</u> daß die räumlich-zeitliche Filterung von einem räumlichen Filter durchgeführt wird, das genausoviele zeitliche Stufen hat, wie es Bilder in der zweiten Teilfolge gibt, um jeweils den genannten Bildern zu entsprechen, wobei die genannten Stufen in einer pyramidenförmigen Struktur angeordnet sind und die Symmetrieachsen, die die genannten privilegierten Richtungen bilden, in den Stufen der genannten pyramidenförmigen Struktur definiert werden, und wobei dieses Filter folgendes durchführt:

in jeder die Stufe die Berechnung der Energie entlang jeder der privilegierten Richtungen im entsprechenden Bild der zweiten Teilfolge,
die Berechnung der in allen Stufen akkumulierten Energien entlang jeder Richtung,
die Berechnung der maximalen Energie unter den akkumulierten Energien.

3. Verfahren nach Anspruch 2, <u>dadurch gekennzeichnet,</u> daß die pyramidenförmige Struktur wenigstens folgendes umfaßt:

eine erste Stufe mit einer ersten linearen Tiefpaß-Einzelfilterzelle mit 8 Symmetrieachsen, um eine lineare Filterung ($F_n$ i,j) im letzten Bild ($D_n$) der zweiten Teilfolge entlang jeder dieser Achsen zu liefern,
eine zweite Stufe mit einer als erste Krone bezeichneten Krone, bestehend aus 8 linearen Tiefpaß-Einzelfilterzellen, wobei diese Krone 8 mit den Achsen der Einzelzelle der ersten Stufe zusammenfallende Symmetrieachsen hat, um eine lineare Filterung $F_{n-1}(i,j)$ im vorletzten Bild ($D_{n-1}$) der zweiten Teilfolge entlang jeder dieser Achsen zu liefern,
eine dritte Stufe mit einer als zweite Krone bezeichneten Krone, bestehend aus 8 linearen Tiefpaß-Einzelfilterzellen, die die erste Krone umgeben, wobei diese Krone 8 mit den Achsen der Einzelzelle der ersten Stufe zusammenfallende Symmetrieachsen hat, um eine lineare Filterung $F_{n-2}(i+k,j+\ell)$ im vorletzten Bild ($D_{n-2}$) der zweiten Teilfolge entlang jeder dieser Achsen zu liefern,
wobei die von dem Filter detektierbaren Bewegungsrichtungen mit den 8 Symmetrieachsen der Stufen zusammenfallen.

4. Verfahren nach Anspruch 3, <u>dadurch gekennzeichnet,</u> daß jede lineare Einzelfilterzelle ein Tiefpaß-Filter mit kleiner Basis, beispielsweise 3 x 3 Pixeln, und mit Koeffizienten ist, die von vornherein in Abhängigkeit vom Umfang der zu identifizierenden Zielobjekte und von deren Geschwindigkeit gewählt werden.

5.  Verfahren nach einem der vorstehenden Ansprüche, dadurch gekennzeichnet, daß in der Folge von abgeglichenen Bildern teilweise Überlappung der Umrisse der Zielobjekte von einem Bild zum nächsten vorliegt.

6.  Verfahren nach einem der vorstehenden Ansprüche, dadurch gekennzeichnet, daß für das Schwellenbildungskriterium unter einer festen Schwellenbildung, einer adaptiven oder einer geregelten Schwellenbildung ausgewählt wird.

7.  Verfahren nach Anspruch 6, dadurch gekennzeichnet, daß eine geregelte Schwellenbildung gewählt wird, um das Bewegungsfilter eine konstante Anzahl von detektierten Zielobjekten zu beliefern.

8.  Verfahren nach einem der vorstehenden Ansprüche, dadurch gekennzeichnet, daß auf den Schwellenbildungsschritt ein Filterschritt mit einem Filter zur Bewegungsverfolgung folgt.

9.  Verfahren nach einem der Ansprüche 1 bis 8, dadurch gekennzeichnet, daß es auf räumlich unter-abgetastete Folgen von Bildern angewendet wird, um Bewegungen mit größerer Amplitude zu detektieren.

10. Verfahren nach einem der Ansprüche 1 bis 8, dadurch gekennzeichnet, daß es auf zeitlich unter-abgetastete Folgen von Bildern angewendet wird, um Bewegungen mit kleinerer Amplitude zu detektieren.

FIG. 1

FIG. 2

FIG.3

FIG.4